# EUROPEAN PATENT APPLICATION

(11) **EP 3 885 566 A1**
(43) Date of publication of application: **29.09.2021**
(21) Application number: 20779518.8
(22) Date of filing: 27.01.2020
(51) Int. Cl.: F02F 11/00, F16J 15/12

(54) **GASKET**

(30) Priority: 25.03.2019 JP 2019056913
(71) Applicant: NOK Corporation, Minato-ku Tokyo 105-8585 (JP)
(72) Inventor: WATANABE, Takeshi, Nihonmatsu-shi, Fukushima 964-8533 (JP); HANADA, Yuki, Tsujido-shinmachi, Fujisawa-shi, Kanagawa 251- 0042 (JP); HYODO, Daisuke, Tsujido-shinmachi, Fujisawa-shi, Kanagawa 251- 0042 (JP)
(74) Representative: Global IP Europe Patentanwaltskanzlei
(86) International application number: PCT/JP2020/002668
(87) International publication number: WO 2020/195093

(57) **Abstract**

Provided is a gasket that can reduce a vibration transmission rate. A gasket (1) has a gasket member (10) including a metal sheet (11) and rubber layers (12, 13) put over both faces (11a, 11b) of the metal sheet (11). The gasket member (10) includes a seal bead (20), at least one insertion hole (16), and at least one dummy bead (30). The seal bead (20) is a part protruding from a lower face (10b) of the gasket member (10) side toward an upper face (10a) of the gasket member (10) side. The insertion hole (16) is a through hole into which a fastener is inserted. The dummy bead (30) is a part protruding from the lower face (10b) of the gasket member (10) side toward the upper face (10a) of the gasket member (10) side. The dummy bead (30) extends around the insertion hole (16). A resonance frequency of the gasket member (10) is adjusted by a length of the dummy bead (30) in a direction of extension.

## Description

### Technical Field

The present invention relates to a gasket.

### Background Art

Conventionally, in vehicles and general-purpose machinery, for example, in automobiles, gaskets have been used for components such as engines and devices housing electronic parts inside to seal housings of the components. A gasket is put and compressed between a pair of members that combine to form a housing and a seal bead of the gasket is thereby deformed to seal a joint between the pair of the members and seal the housing, for example. A gasket of this type is what is called a rubber coated metal gasket made from a rubber coated metal that includes a metal sheet and a rubber material put over both surfaces of the metal sheet to provide improved sealing performance (for example, see Patent Literature 1).

### Document List

### Patent Literature

Patent Literature 1: Japanese Patent No. 5454010

### Summary of Invention

### Technical Problem

Materials primarily used to produce housings of automotive parts are, for example, aluminum alloys, magnesium alloys, and iron-based metallic materials, and these materials readily transmit vibrations. The vibrations transmitted by automotive parts are vibrations in a wide frequency band ranging from low to high frequencies. Thus, by parts and devices for which gaskets are used, vibrations are readily transmitted and vibrations in a wide frequency band are transmitted. A rubber coated metal gasket can reduce its vibration transmission rate by a damping action of a rubber layer of a surface layer. However, the vibration transmission rate of the gasket can increase when a resonance frequency of the seal bead that elastically deforms coincides with a frequency of an input vibration. Consequently, the conventional gasket has been required to have a structure that avoids a coincidence between the resonance frequency of the seal bead of the gasket and a frequency of an input vibration to reduce the vibration transmission rate of the gasket.

The present invention has been made in view of the above described problem, it is an object of the present invention to provide a gasket that enables a vibration transmission rate to be reduced.

### Solution to Problem

To achieve the object described above, a gasket according to the present invention is characterized in having a gasket member including a metal sheet that is a sheet made of metal and a rubber layer that is a layer containing a rubber material. Both faces of the metal sheet are covered with the layer. The gasket member includes: a seal bead that is a part protruding toward one of the both faces of the gasket member side from another of the both faces of the gasket member side; at least one insertion hole into which a fastener is inserted; and at least one dummy bead that is a part protruding toward the one of the both faces of the gasket member side from the other of the both faces of the gasket member side, the at least one dummy bead extends around the insertion hole, and a resonance frequency of the gasket member is adjusted by a length of the dummy bead in a direction of extension.

In the gasket according to one aspect of the present invention, the dummy bead extends between straight lines that intersect with each other at a predetermined angle.

In the gasket according to one aspect of the present invention, the dummy bead extends in an arc shape.

In the gasket according to one aspect of the present invention, the dummy bead extends in an endless annular shape.

The gasket according to one aspect of the present invention includes a plurality of the gasket members. The plurality of the gasket members are superimposed on each other, and in the gasket members superimposed on each other, the dummy beads are superimposed on each other.

### Effects of Invention

According to the gasket according to the present invention, it is possible to reduce a vibration transmission rate.

### Brief Description of Drawings

[Fig. 1] A front view for illustrating a schematic configuration of a gasket according to an embodiment of the present invention.
[Fig. 2] A cross-sectional view of the gasket taken along line A-A in Fig. 1.
[Fig. 3] An enlarged front view of a dummy bead of a gasket according to the embodiment of the present invention.
[Fig. 4] A diagram illustrating a state of a cross section of the gasket according to the embodiment of the present invention in a usage state taken along line A-A in Fig. 1.
[Fig. 5] A graph illustrating vibration transmission rate curves of the gasket according to the embodiment of the present invention shown through a simulation.
[Fig. 6] A diagram illustrating a modification example of a dummy bead of a gasket according to an embodiment of the present invention.
[Fig. 7] A diagram illustrating a state of a cross section of a modification example of a gasket according to an embodiment of the present invention in a usage state taken along line A-A in Fig. 1.
[Fig. 8] A diagram illustrating a state of a cross section of another modification example of a gasket according to an embodiment of the present invention in a usage state taken along line A-A in Fig. 1.

### Description of Embodiments

Hereinafter, an embodiment of the present invention will be described with reference to the drawings.

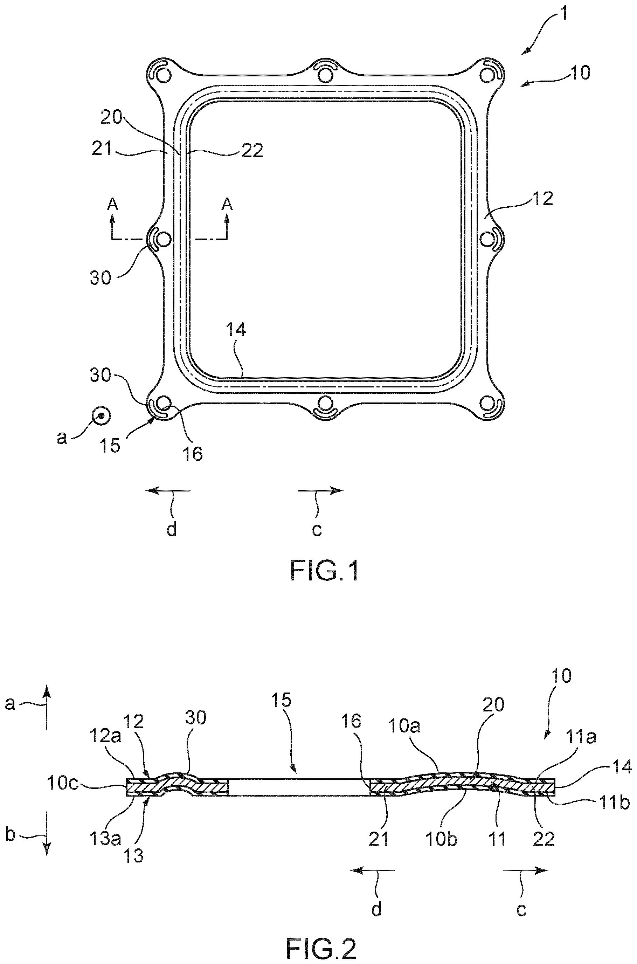

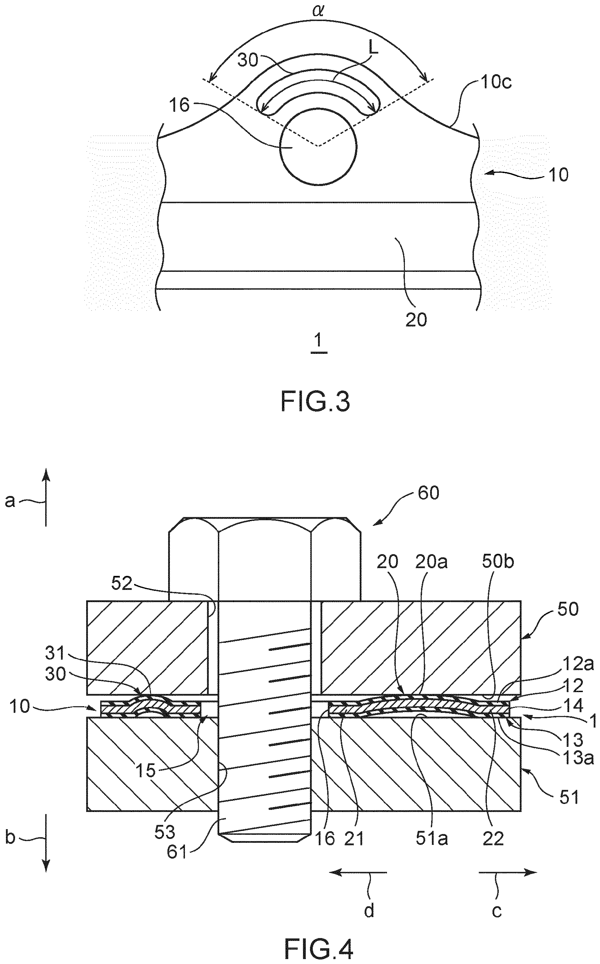

Fig. 1 is an front view for illustrating a schematic configuration of a gasket 1 according to an embodiment of the present invention, and Fig. 2 is a cross-sectional view of the gasket 1 taken along line A-A in Fig. 1. Fig. 3 is an enlarged front view of a dummy bead 30 of the gasket 1. The gasket 1 has a function of sealing a gap in a joint between various two members such as a joint between a cylinder block and a cylinder head, a joint between a cylinder head and a cylinder head cover, and a joint between an exhaust manifold and an exhaust pipe of an internal-combustion engine, as well as electrical units (e.g., motors, inverters, converters, and PCU) as an object to be sealed. The objects to which the gasket 1 is applied are not limited to the examples described above.

The gasket 1 according to the embodiment of the present invention has a gasket member 10 including a metal sheet 11 that is a sheet made of metal and rubber layers 12 and 13 that are layers containing a rubber material, the rubber layers 12 and 13 being put over the both faces 11a and 11b of the metal sheet 11. The gasket member 10 includes a seal bead 20, at least one insertion hole 16, and at least one dummy bead 30. The seal bead 20 is a part protruding toward one of the both faces 10a and 10b of the gasket member 10 side from another of the both faces 10a and 10b of the gasket member 10 side. The insertion hole 16 is a through hole into which a fastener is inserted, the fastener being used in a usage state described later. The dummy bead 30 is a part protruding toward the one of the both faces 10a and 10b of the gasket member 10 side from the other of the both faces 10a and 10b of the gasket member 10 side. The dummy bead 30 extends around the through hole 16. A resonance frequency of the gasket member 10 is adjusted by a length of the dummy bead 30 in a direction of extension. Hereinafter, configurations of the gasket 1 will be described in detail.

In the following description, for the purpose of convenience of description, the one of the both faces 10a and 10b of the gasket member 10 side is an upper side (an arrow a direction side in Fig. 2), and the other of the both faces 10a and 10b of the gasket member 10 side is a lower side (an arrow b direction side in Fig. 2). Thus, the one of the both faces 10a and 10b of the gasket member 10 on the one side is the upper face 10a, and the other one on the other side is the lower face 10b. One of the both faces 11a and 11b of the metal sheet 11 on the one side is the upper face 11a, and the other one on the other side is the lower face 11b. A space side, the space being closed with the gasket 1, is an internal side (an arrow c direction side in Fig. 2), and a space side, the space not being closed with the gasket 1, is an external side (an arrow d direction side in Fig. 2).

In the gasket 1, as illustrate in Fig. 1, the gasket member 10 extends annularly and an opening 14 is formed on the internal side. The gasket member 10 has an extended shape that suits the object to which the gasket is applied, and the gasket member 10 is formed such that the object to be sealed is within a zone of the opening 14. In an example illustrated in the figure, the gasket member 10 is substantially rectangular in extended shape. The gasket member 10 has a plurality of bolt supports 15 protruding toward the external side. As illustrated in Fig. 1, the insertion hole 16 is formed in each of the bolt supports 15. A bolt 60 (Fig. 4) that is a fastener used for fastening in the usage state described later is inserted in the insertion hole 16.

The gasket member 10 is a rubber coated metal gasket. In other words, as illustrated in Fig. 2, the gasket member 10 includes the metal sheet 11, the upper rubber layer 12 put over the upper face 11a of the metal sheet 11, and the lower rubber layer 13 put over the lower face 11b of the metal sheet 11. The metal sheet 11 is, for example, a SPCC steel sheet, a stainless steel sheet, a cold-rolled steel sheet, a galvanized steel sheet, or an aluminum steel sheet. The upper rubber layer 12 and the lower rubber layer 13 are synthetic rubber containing at least one type of rubber selected from nitrile rubber, styrenebutadiene rubber, fluororubber, acrylic rubber, and silicone rubber, for example. A form of the rubber of the upper and the lower rubber layers 12 and 13 may be solid rubber or may be foam rubber.

The gasket member 10 has an external hem part 21 and an internal hem part 22 that extend along the seal bead 20, respectively, on both sides in a width direction crossing a direction of extension of the seal bead 20. As illustrated in Figs. 1 to 3, the external hem part 21 is a flat sheet-shaped part connecting to an end portion on the external side of the seal bead 20. As illustrated in Figs. 1 to 3, the internal hem part 22 is a flat sheet-shaped part connecting to an end portion on the internal side of the seal bead 20.

The seal bead 20 is, as described above, a part protruding from the lower side to the upper side (in the arrow a direction) and is formed so as to be in contact with one housing 50 (Fig. 4) in the usage state described later, the one housing 50 being a member on the upper side of a joint of an object to be sealed. As illustrated in Fig. 2, the seal bead 20, for example, protrudes such that a cross-sectional shape of the seal bead 20 is a convex arc shape protruding upward. The cross-sectional shape of the seal bead 20 is not limited to the arc shape. The seal bead 20 may be a half bead type instead of a full bead type as illustrated in the figure.

The dummy bead 30 is not a bead like the seal bead 20 having the function of sealing a gap in a joint between two members but a bead that works to reduce reaction force of the seal bead 20 generated in response to fastening force of the fastener. As illustrated in Figs. 1 to 3, the dummy bead 30 is formed around each of the insertion holes 16 and is provided on the external side of each of the insertion holes 16. The dummy bead 30, as described above, protrudes from the lower side to the upper side (in the arrow a direction) and is formed so as to be in contact with either the one housing 50, the one housing 50 being the member on the upper side of the joint of the object to be sealed, or another housing 51 (Fig. 4), the other housing 51 being a member on the lower side of the joint of the object to be sealed, in the usage state described later. As illustrated in Fig. 2, the dummy bead 30, for example, protrudes such that a cross-sectional shape of the dummy bead 30 is a convex arc shape protruding upward. The cross-sectional shape of the dummy bead 30 is not limited to the arc shape, and the cross-sectional shape of the dummy bead 30 may be, for example, a trapezoid or a substantially trapezoid, or other shapes protruding from the lower side to the upper side or from the upper side to the lower side. The dummy bead 30 protrudes, is provided with spring elasticity, and is elastically deformable in an up-down direction.

As illustrated in Fig. 3, the dummy bead 30 extends between straight lines that intersect with each other at a predetermined angle (an extended angle α) and extends between an end portion on the external side of the gasket member 10 (an external end 10c) and the insertion hole 16. The dummy bead 30 extends in an arc shape, for example. In other words, the dummy bead extends along an arc having the extended angle α as a center angle. The dummy bead 30, for example, extends on a circle concentric with the insertion hole 16. The dummy bead 30 may not extend on the circle concentric with the insertion hole 16. The length of the dummy bead 30 in the direction of the extension of the dummy bead 30 (a length L) has a value that is determined by the extended angle α.

As described above, the resonance frequency of the gasket member 10 is adjusted by the length L of the dummy bead 30 in the extension direction. Specifically, a spring constant of the dummy bead 30 is adjusted by the length L of the dummy bead 30 in the extension direction. The length L of the dummy bead 30 is proportional to the extended angle α if the dummy bead 30 extends in an arc shape as in the illustrated example. The spring constant of the dummy bead 30 is small when the length L of the dummy bead 30 is small, i.e., when the extended angle α of the dummy bead 30 is small. Meanwhile, the spring constant is large when the length L of the dummy bead 30 is large, i.e., when the extended angle α of the dummy bead 30 is large. The spring constant of each of the dummy beads 30 of the gasket member 10 is adjusted by adjusting the extended angle α of each of the dummy beads 30.

In the gasket member 10 of the gasket 1, a value of the extended angle α of the dummy bead 30 is adjusted so that the spring constant of the dummy bead 30 of the gasket member 10 is small. Thus, the resonance frequency of each of the dummy beads 30, i.e., the resonance frequency of the gasket member 10, is a value that is on a lower frequency side with respect to a frequency of an input vibration from the object to which the gasket is applied in the usage state. Therefore, it is possible that the frequency of the input vibration from the object to which the gasket is applied in the usage state differs from the resonance frequency of the gasket 1 and that a vibration transmission rate of the gasket 1 is low.

In this way, in the gasket 1 according to the embodiment of the present invention, the form (the extended angle α or the length L in the extension direction) of each of the dummy beads 30 of the gasket member 10 is changed to thereby enable the resonance frequency of the gasket member 10 to be adjusted. This allows the resonance frequency of the gasket member 10 to be a frequency different from the frequency of the input vibration from the object to which the gasket is applied in the usage state, hence it is possible to make the vibration transmission rate of the gasket 1 low.

The resonance frequency of the gasket member 10 of the gasket 1 adjusted by the extended angle α or the extended length L of the dummy bead 30 is not limited to a value that is on the lower frequency side with respect to the frequency of the input vibration from the object to which the gasket is applied in the usage state. The resonance frequency of the gasket member 10 may be a value on a higher frequency side with respect to the frequency of the input vibration from the object to which the gasket is applied in the usage state.

The resonance frequency of the gasket member 10 may be adjusted by adjusting the extended angle α or the length L in the extension direction of the dummy bead 30 such that the gasket member 10 has an anti-vibration action on the input vibration from the object to which the gasket is applied in the usage state. For instance, the resonance frequency of the gasket member 10 may be adjusted such that the gasket member 10 has an anti-vibration action on vibrations in a frequency band in which the input vibration from the object to which the gasket is applied in the usage state is strong. This allows to make the vibration transmission rate of the gasket 1 with regard to the input vibration from the object to which the gasket is applied in the usage state further low.

Next, operation of the gasket 1 having the above-described configuration will be described. Fig. 4 is a diagram illustrating a state of a cross section of the gasket 1 in the usage state taken along line A-A in Fig. 1. In the usage state of the gasket 1, the gasket 1 is sandwiched in a joint between two members of the object to which the gasket is applied and is compressed between the two members to seal the joint. In an example illustrated in the figure, the one housing 50 such as a cylinder head of an internal-combustion engine and the other housing 51 such as a cylinder block of the internal-combustion engine are shown as the two members of the object to which the gasket is applied. In the usage state, the gasket 1 is put between the one housing 50 and the other housing 51. In addition, a male thread 61 of the bolt 60 as a fastener passes through a bolt through hole 52 to penetrate through the one housing 50 and passes through the insertion hole 16 in the bolt support 15 of the gasket member 10 to be screwed into a female thread 53 formed in the other housing 51, whereby the one housing 50 is fastened to the other housing 51. As a result, the gasket 1 is compressed between the one housing 50 and the other housing 51 in the up-down direction.

As illustrated in Fig. 4, when the gasket 1 is in the usage state, a lower face 13a of the lower rubber layer 13 at the external hem part 21 and the internal hem part 22 is in contact with an upper face 51a, the upper face 51a being a contact face of the other housing 51. The seal bead 20 is pressed to a lower face 50b, the lower face 50b being a contact face of the one housing 50 at an upper end portion 20a on the upper side. Since the gasket 1 is compressed by fastening force of the bolt 60 in the up-down direction, the seal bead 20 is compressed spring-elastically in the up-down direction and is deformed. As a result, the joint between the one housing 50 and the other housing 51 is sealed.

Similarly, the dummy bead 30 is pressed to the lower face 50b, the lower face 50b being a contact face of the one housing 50, at an upper end portion 31 that is an end portion of the dummy bead 30 facing the upper side. Since the gasket 1 is compressed by the fastening force of the bolt 60 in the up-down direction, the dummy bead 30 is compressed spring-elastically in the up-down direction and is deformed. As described above, in the gasket 1 according to the embodiment of the present invention, the extended angle α or the length L in the extension direction of each of the dummy beads 30 is adjusted to adjust the spring constant of each of the dummy beads 30 and adjust the resonance frequency of the gasket member 10. Hence, the resonance frequency of the gasket 1 does not coincide with the frequency of vibrations input from one of or both of the one housing 50 and the other housing 51. This results in a reduction in the vibration transmission rate of the gasket 1 between the one housing 50 and the other housing 51 and a reduction in transmission of vibrations through the gasket 1 between the one housing 50 and the other housing 51.

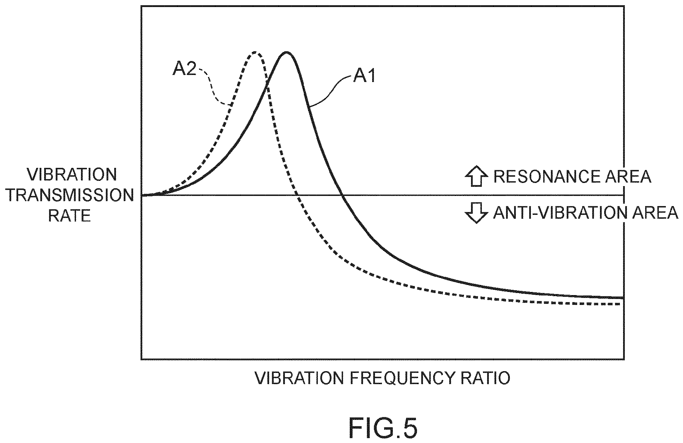

Fig. 5 is a graph illustrating vibration transmission rate curves of the gasket 1 shown through a simulation. The horizontal axis represents a vibration frequency ratio that is a ratio between an input vibration frequency and the resonance frequency of the gasket member 1, and the vertical axis represents a vibration transmission rate of each of the vibration frequency ratio. In Fig. 5, a line A1 indicates a result of a simulation performed on an example of the gasket 1 (Example 1), whereas a line A2 indicates a result of a simulation performed on another example of the gasket 1 (Example 2). In Example 2, the extended angle α or the length L in the extension direction of the dummy bead 30 was adjusted to make the resonance frequency of the gasket 1 (Example 2) lower than the resonance frequency of Example 1. In other words, the spring constant of the dummy bead 30 in Example 2 is smaller than the spring constant of the dummy bead 30 in Example 1, and the extended angle α or the length L in the extension direction of the dummy bead 30 in Example 2 is less than the extended angle α or the length L in the extension direction of the dummy bead 30 in Example 1.

As shown in the simulation results illustrated in Fig. 5, it is proved that Example 2 can make the resonance frequency of the gasket 1 lower compared with Example 1. Therefore, from the simulation results illustrated in Fig. 5, it is proved that the resonance frequency of the gasket 1 can be adjusted by adjusting the extended angle α or the length L in the extension direction of the dummy bead 30. Thus, in the gasket 1 according to the embodiment of the present invention, the resonance frequency of the gasket 1 is shifted from an input frequency of a vibration generated in a vehicle or other apparatus to thereby enable resonance of the gasket 1 to be avoided and adjust a resonance area and an anti-vibration area of the gasket 1. In particular, the spring constant of the dummy bead 30 is lowered and thus the resonance frequency of the gasket 1 is set to a low frequency to thereby enable the resonance area of the gasket 1 to be decreased and enable the anti-vibration area of the gasket 1 to be increased, whereby the anti-vibration performance can be improved.

Although the preferred embodiment of the present invention has been described above, the present invention is not limited to the embodiment, and includes any modes falling within the scope of the concept and claims of the present invention. Respective configurations may be appropriately selectively combined to solve at least part of the above-described problems and achieve at least part of the above-described effects. For example, in the above-described embodiment, the shape, material, arrangement, size and the like of each component can be appropriately changed according to a specific use mode of the present invention.

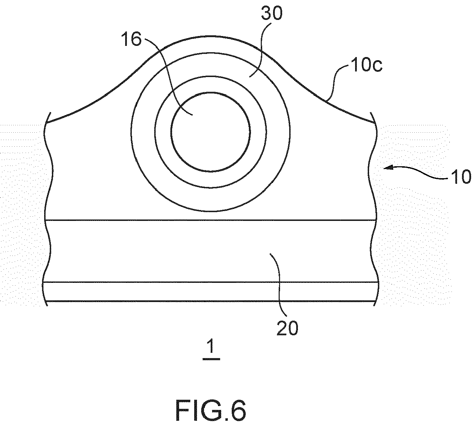

As illustrated in Fig. 6, the dummy bead 30 may extend, for example, in an endless annular shape. Specifically, the dummy bead 30 may extend annularly on a circle concentric with the insertion hole 16. In this case, the extended angle α of the dummy bead 30 is 360°.

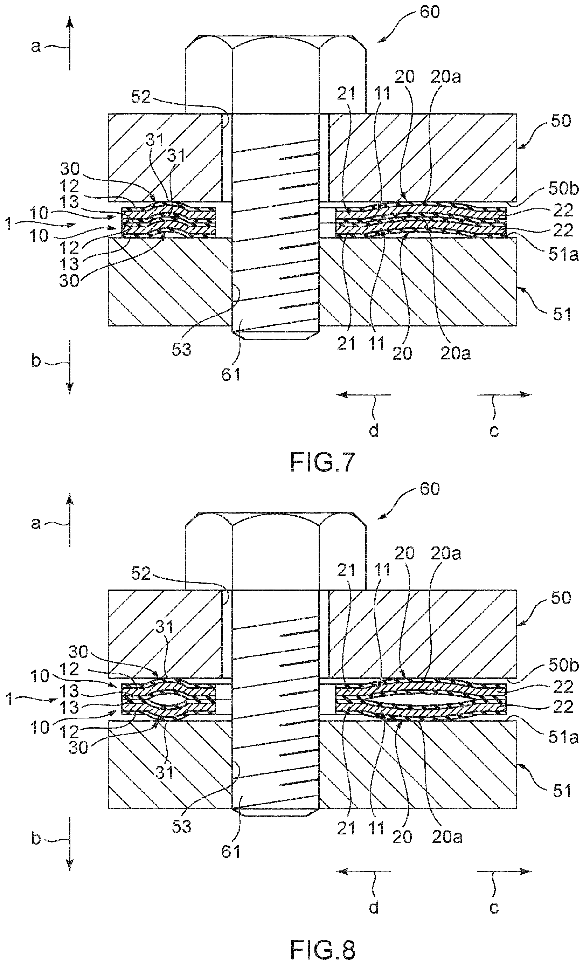

The gasket 1 according to the embodiment of the present invention has one gasket member 10. A gasket according to the present invention may have, for example, a plurality of gasket members 10. In this case, the plurality of the gasket members 10 are superimposed on each other, for example. In the gasket members 10 superimposed on each other, seal beads 20 are superimposed on each other and respective dummy beads 30 are superimposed on each other. Specifically, as a modification example of the gasket 1, a gasket 1, as illustrated in Fig. 7, has two gasket members 10, and seal beads 20 superimposed on each other face the same side. In other words, the two gasket members 10 are superimposed on each other such that the lower seal bead 20 is housed in a recessed part of the upper seal bead 20 and both the seal beads 20 are superimposed on and in contact with each other. Similarly, dummy beads 30 superimposed on each other face the same side. In other words, the two gasket members 10 are superimposed on each other such that the lower dummy bead 30 is housed in a recessed part of the upper dummy bead 30 and both the dummy beads 30 are superimposed on and in contact with each other.

In another modification example of the gasket 1, a gasket 1, as illustrated in Fig. 8, has two gasket members 10. Seal beads 20 superimposed on each other face away from each other and dummy beads 30 superimposed on each other face away from each other. In other words, of the two gasket members 10, the lower gasket member 10 is disposed such that an upper end portion 20a of the seal bead 20 faces downward, and the upper gasket member 10 is disposed such that an upper end portion 20a of the seal bead 20 of the upper gasket member 10 faces upward. As a result, both the seal beads 20 face away from each other in the up-down direction. In this case, the seal bead 20 of the upper gasket member 10 and the seal bead 20 of the lower gasket member 10 contact a joint upward and downward, respectively, to thereby seal the joint. Similarly, of the two gasket members 10, the lower gasket member 10 is disposed such that an upper end portion 31 of the dummy bead 30 faces downward, and the upper gasket member 10 is disposed such that an upper end portion 31 of the dummy bead 30 faces upward. As a result, both the dummy beads 30 face away from each other in the up-down direction. In this case, the dummy bead 30 of the upper gasket member 10 and the dummy bead 30 of the lower gasket member 10 contact a joint upward and downward, respectively.

Thus, owing to a plurality of the gasket members 10 superimposed on each other, the dummy beads 30 constitute an element of springs arranged in series and can provide an extended adjustable range for the resonance frequency of the gasket 1. This allows the resonance frequency of the gasket 1 to be adjusted further on the lower frequency side. Contact between the gasket members 10 in the gasket 1 generates friction between the gasket members 10. Friction damping caused by this friction increases hysteresis and contributes to a further reduction in the vibration transmission rate of the gasket 1.

### List of Reference Signs

- 1: gasket,
- 10: gasket member,
- 10a: upper face,
- 10b: lower face,
- 10c: external end,
- 11: metal sheet,
- 11a: upper face,
- 11b: lower face,
- 12: upper rubber layer,
- 13: lower rubber,
- 13a: lower face,
- 14: opening,
- 15: bolt support,
- 16: insertion hole,
- 20: seal bead,
- 20a: upper end portion,
- 21: external hem part,
- 22: internal hem part,
- 30: dummy bead,
- 31: upper end portion,
- 50: one housing,
- 50b: lower face,
- 51: other housing,
- 51a: upper face,
- 52: bolt insertion hole,
- 53: female thread,
- 60: bolt,
- 61: male thread,
- α: extended angle,
- L: length

## Claims

1. A gasket **characterized in** comprising a gasket member including a metal sheet that is a sheet made of metal and a rubber layer that is a layer containing a rubber material with which both faces of the metal sheet are covered, wherein:
the gasket member includes a seal bead that is a part protruding toward one of the both faces of the gasket member side from another of the both faces of the gasket member side, at least one insertion hole into which a fastener is inserted, and at least one dummy bead that is a part protruding toward the one of the both faces of the gasket member side from the other of the both faces of the gasket member side;
the at least one dummy bead extends around the insertion hole; and
a resonance frequency of the gasket member is adjusted by a length of the dummy bead in a direction of extension.

2. The gasket according to claim 1, **characterized in that** the dummy bead extends between straight lines that intersect with each other at a predetermined angle.

3. The gasket according to claim 2, **characterized in that** the dummy bead extends in an arc shape.

4. The gasket according to claim 1, **characterized in that** the dummy bead extends in an endless annular shape.

5. The gasket according to any one of claims 1 to 4, **characterized in** comprising a plurality of the gasket members, wherein,
the plurality of the gasket members are superimposed on each other, and, in the gasket members superimposed on each other, the dummy beads are superimposed on each other.
